# EUROPEAN PATENT SPECIFICATION

(11) **EP 1 014 511 B1**
(45) Date of publication and mention of the grant of the patent: **06.05.2004**
(21) Application number: 99125630.6
(22) Date of filing: 22.12.1999
(51) Int. Cl.: G06K 7/00, H01R 12/16

(54) **IC card connector**
Verbinder für IC-Karten
Connecteur pour cartes à puces

(30) Priority: 24.12.1998 JP 36803898
(43) Date of publication of application: 28.06.2000
(73) Proprietor: ALPS ELECTRIC CO., LTD., Ota-ku Tokyo 145 (JP)
(72) Inventor: Inadama, Masayuki, Ota-ku, Tokyo 145 (JP)
(74) Representative: Hirsch, Peter, Dipl.-Ing.

(56) References cited:
- DE-C- 19 624 079
- GB-A- 2 298 743
- US-A- 4 623 207
- US-A- 5 726 432

## Description

### BACKGROUND OF THE INVENTION

### 1. Field of the Invention

The present invention relates to an IC card connector and, in particular, to an IC card connector capable of reducing the number of lead-out terminals.

### 2. Description of the Related Art

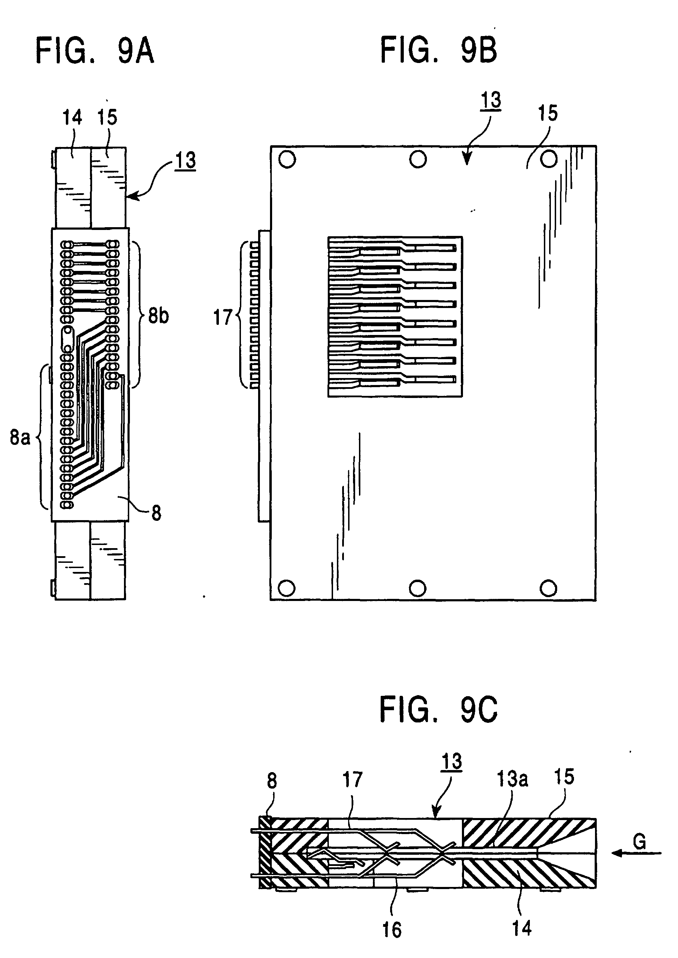

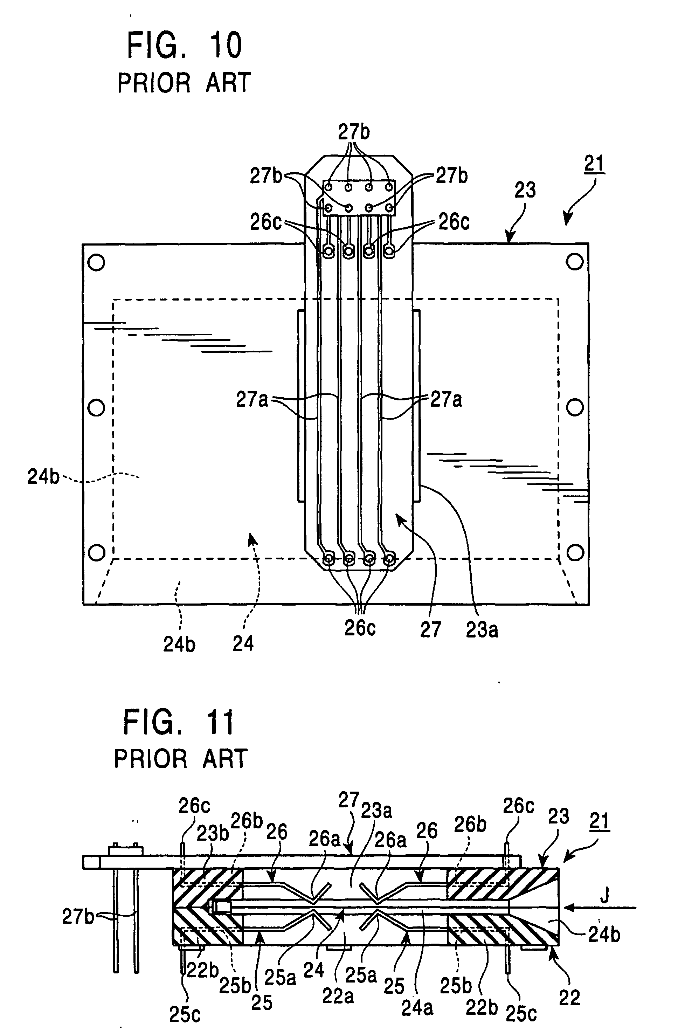

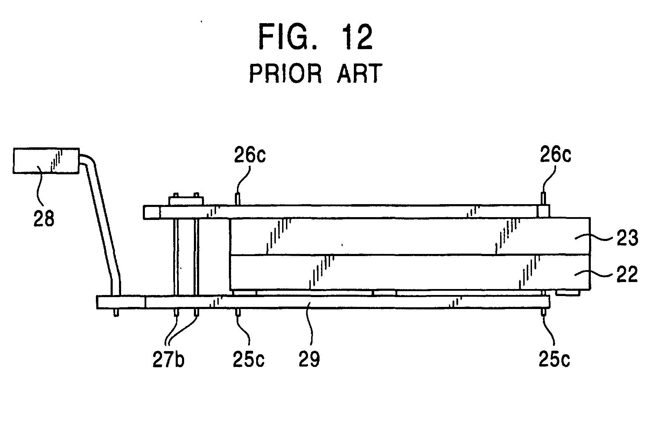

As shown in Figs. 10, 11, and 12, in a conventional IC card connector, a housing 21 having a substantially rectangular configuration is divided into a lower housing 22 and an upper housing 23. In the portion where the lower housing 22 and the upper housing 23 are opposed to each other, there is provided an insertion hole 24 allowing an IC card (not shown) to be inserted in the direction of an arrow J in Fig. 9 and, in this insertion hole 24, there are provided a card holding portion 24a and an insertion inlet 24b which is on the front side and shown on the right-hand side in the drawing and which is tapered and wide.

In the lower housing 22, there is formed a contact lead-out portion 22a which is vertically open as seen in Fig. 11, and attached to the front and rear terminal mounting portions 22b of the lower housing 22 are lower terminals 25, which are, for example, four in number, respectively, and eight in total, and contact portions 25a of the lower terminals 25 are led out to the contact lead-out portion 22a and arranged in parallel with the arrow J and opposed to each other.

Connection portions 25b of the lower terminals 25 are mounted such that they are bent substantially at right angles inside the terminal mounting portions 22b, and outer terminal portions 25c of the lower terminals 25 are led out downward to the exterior of the lower housing 22 as shown in Fig. 11.

Also in the upper housing 23 opposed to the lower housing 22, a contact lead-out portion 23a is formed, and mounted to the front and rear terminal mounting portions 23b are upper terminals 26, which are, for example, four in number, respectively, eight in total, and contact portions 26a of the upper terminals 26 arranged in parallel and opposed to the contact portions 25a of the lower terminals 25.

The upper terminals 26 are upwardly bent substantially at right angles inside the front and rear terminal mounting portions 23b as shown in Fig. 9, and outer terminal portions 26c are led out upwardly from the upper housing 22.

A relay substrate 27 is arranged on the upper surface of the upper housing 23 so as to extend rearward beyond the housing 21. The external terminal portions 26c of the upper terminals 26 are connected by soldering to a wiring pattern 27a formed on the relay substrate 27.

On the rear side portion of the relay substrate 27 extending beyond the housing 21, there are mounted relay terminals 27b in a number corresponding to the number of the external terminal portions 26c (eight), and the external terminal portions 26c and the relay terminals 27b are electrically connected by the wiring pattern 27a.

The relay terminals 27b are soldered to the relay substrate 27, and led out downward as shown in Fig. 9, and the lead-out length is substantially the same as that of the external terminal portions 25c of the lower terminals 25.

The IC card connector constructed as described above is mounted to the mother substrate of a device (not shown) by soldering the outer terminal portions 25c of the lower terminals 25 and the relay terminals 27b.

An IC card (not shown) inserted into this conventional IC card connector has on one side a plurality of contact portions connected to a memory portion.

When the IC card is inserted into the insertion hole 24 with the contact portions being directed upward, the contact portions 26a of the upper terminals 26 are brought into elastic contact with the contact portions on one side of the IC card, and it is possible to read information written to the IC card by means of the device (not shown).

When the IC card is inserted into the insertion hole 24 with the contact portions of the IC card being directed downward, the contact portions 25a of the lower terminals 25 come into elastic contact with the contact portions of the IC card.

In a modification of the conventional IC card connector in terms of output, the lower terminals 25 and the relay terminals 27b are mounted to an auxiliary substrate 29 by soldering, and a connector 28 is led out from this auxiliary substrate 29.

In this conventional IC card connector, the relay substrate 27 to which eight relay terminals 27b are mounted to the wiring pattern 27a by soldering or the like is mounted to the eight external terminal portions 26c upwardly protruding from the upper housing 23 by soldering or the like, so that the assembly operation is rather difficult to perform.

Further, in the conventional IC card connector, round-pin-like relay terminals 27b mounted to the relay substrate 27 are led out downward, so that the mounting on the mother substrate of the device (not shown) can only be effected by dip soldering or manual soldering, and surface mounting is not possible, so that the efficiency in device assembly is rather poor.

### SUMMARY OF THE INVENTION

The present invention has been made with a view toward solving the above problems. Accordingly, it is an object of the present invention to provide an IC card which has satisfactory assembly property and which provides satisfactory assembly efficiency and can be mounted to the mother substrate of the device by surface mounting or the like.

To achieve the above object, there is provided, in a first aspect of the invention, an IC card connector comprising a housing formed by an insulating material, an insertion hole which is formed in the housing and into which an IC card is inserted, a terminal mounting portion closing the bottom of the insertion hole, and a plurality of metal terminals which are arranged in two rows in the inserting direction of the insertion hole, in alignment above and below the insertion hole, and which can come into contact with contact portions formed on the IC card, wherein one ends of the metal terminals can come into elastic contact with the contact portions of the IC card, wherein the other ends of the metal terminals are led out to the rear side of the housing from the terminal mounting portion, and wherein the other ends of the metal terminals are connected to a conductive pattern of a substrate arranged on the rear side of the housing.

In a second aspect of the invention, there is provided an IC card connector wherein the housing is formed by stacking together upper and lower members, wherein the insertion hole is formed between the two members stacked together, wherein the terminal mounting portion is formed in each of the two members, and wherein the other ends of the metal terminals are led out from the rear side of the two members.

In a third aspect of the invention, there is provided an IC card connector wherein, of the upper and lower metal terminals, those metal terminals coming into contact with the contact portions of the IC card given the same meaning are individually connected to each other by the conductive pattern.

In a fourth aspect of the invention, there is provided an IC card connector wherein the substrate is provided with lead-out terminals protruding rearward from this substrate, and wherein the lead-out substrates and the other ends of the metal terminals are connected by the conductive pattern.

### BRIEF DESCRIPTION OF THE DRAWINGS

Figs. 1A, 1B and 1C are a rear view, a plan view and a main part side sectional view of the IC card connector of the present invention;
Figs. 2A and 2B are a plan view and a main part side sectional view of the lower housing of the present invention;
Figs. 3A and 3B are a plan view and a main part side sectional view of the upper housing of the present invention;
Fig. 4 is a front view of the substrate of the present invention;
Fig. 5 is a circuit diagram of the substrate of the present invention;
Figs. 6A and 6B are diagrams illustrating a modification of the IC card of the present invention;
Fig. 7 is a schematic diagram illustrating a modification of the terminal of the present invention;
Fig. 8 is a schematic diagram illustrating a modification of the terminal of the present invention;
Figs. 9A, 9B and 9C are diagrams illustrating another embodiment of the present invention;
Fig. 10 is a plan view of a conventional IC card connector;
Fig. 11 is a side sectional view of the conventional IC card connector; and
Fig. 12 is a side view of the conventional IC card connector.

### DESCRIPTION OF THE PREFERRED EMBODIMENT

The IC card connector of the present invention will now be described with reference to the drawings.

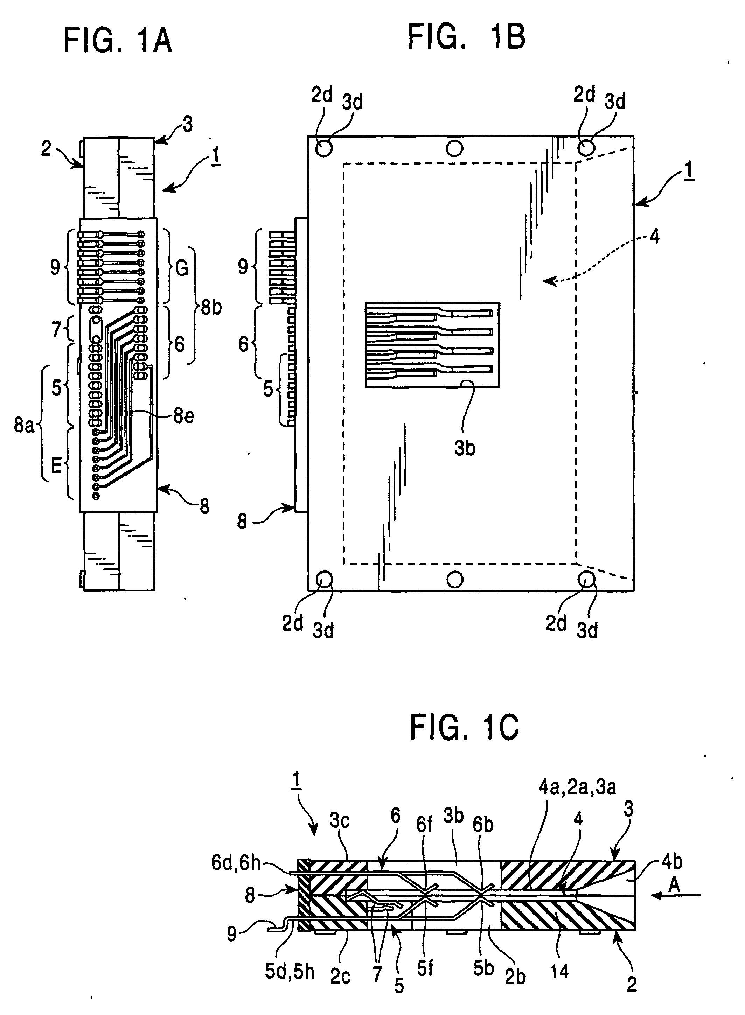

First, as shown in Figs. 1A, 1B and 1C, the IC card connector of the present invention comprises a housing 1 which has a substantially rectangular configuration and which is made of an insulating material. The housing 1 is composed of a lower housing 2 and an upper housing 3 which are superimposed one upon the other, and between the lower housing 2 and the upper housing 3, there is formed an insertion hole 4 through which an IC card described below can be inserted in the direction indicated by the arrow A.

This insertion hole 4 is open on the front side which is on the right-hand side in the drawing and is closed on the rear side which is on the left-hand side in the drawing.

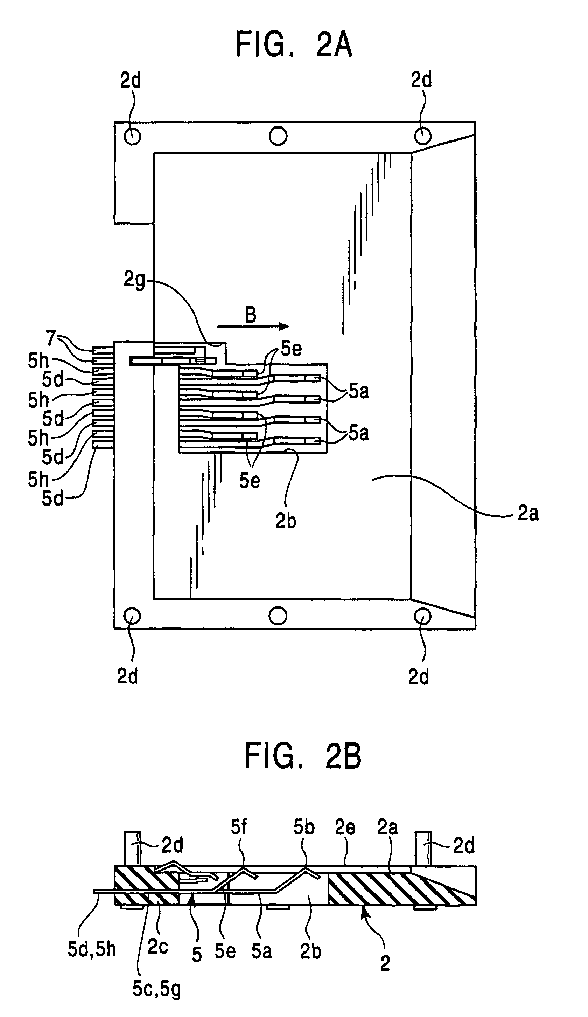

The lower housing 2 is formed of an insulating material and, as shown in Fig. 2, has a substantially rectangular external configuration, a card holding groove 2a which constitutes a part of the insertion hole 4 being formed so as to be upwardly open.

Further, the lower housing 2 has a substantially rectangular terminal lead-out portion 2b at a position somewhat below the center with respect to the vertical direction in Fig. 2A. At the left-hand end as seen in the drawing of the terminal lead-out portion 2b, there is formed a terminal mounting portion 2c closing the card holding groove 2a, and lower terminals 5 consisting of elastic metal plates and in alignment with each other are mounted to the terminal mounting portion 2c by insert molding or the like.

In the terminal lead-out portion 2b, one ends of the lower terminals 5 are led out forwardly and arranged therein. The lower terminals 5 thus led out to the terminal lead-out portion 2b consist of first and second terminals 5a and 5e having different lengths.

Further, a plurality of mounting legs 2d for mounting the upper housing 3 protrude the upper and lower outer portions as seen in Fig. 2A of the lower housing 2 which are situated above and below the card holding groove 2a.

Of the first and second terminals 5a and 5e led out to the terminal lead-out portion 2b, the first terminals 5a are led out so as to be longer than the second terminals 5e. Each of the first terminals 5a is bent so as to be substantially triangular and its apex serves as a contact portion 5b. The apex of this contact portion 5b is substantially the same height as the upper surface 2e of the lower housing 2. The mounting portions 5c of the first terminals 5a are mounted to the terminal mounting portion 2c by insert molding or the like, and the external terminal portions 5d which are the other ends are led out from the rear end of the terminal mounting portion 2c.

The contact portions 5f, the terminal mounting portions 5g and the external terminal portions 5h of the second terminals 5e, which are shorter than the first terminals 5e, are formed in the same manner as those of the first terminals 5a.

For example, four first terminals 5a and four second terminals 5e, eight in total, are arranged so as to be adjacent to each other. They are insulated from each other and mounted to the terminal mounting portion 2c by insert molding or the like.

Further, the contact portions 5b and 5f are formed so as to overlap each other in the extension of the lead-out direction the lower terminals 5 (the direction indicated by the arrow B).

Further, above and to the left of the contact lead-out portion 2b shown in Fig. 2A, there is formed a switch terminal lead-out portion 2g, and a detection switch 7 consisting of two contacts is formed in this switch terminal lead-out portion 2g. This detection switch 7 is depressed by the IC card 11 described below which is inserted into the insertion hole 4, and the two contacts come into contact with each other, whereby the IC card 11 inserted can be detected.

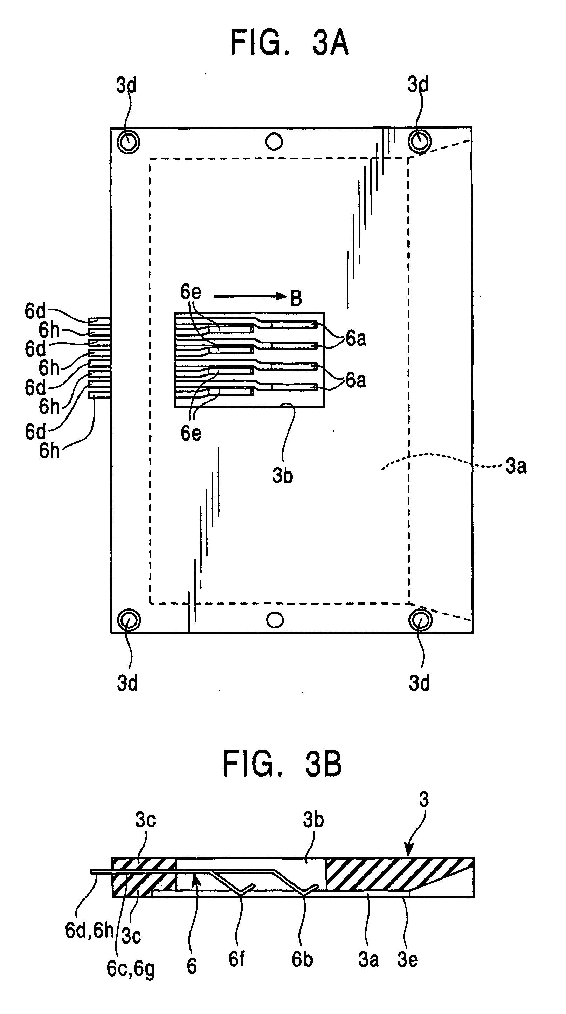

Further, the upper housing 3 is superimposed on the lower housing 2 so as to be opposed to it. This upper housing 3 is formed of an insulating material and, as shown in Fig. 3, has a substantially rectangular outer configuration, with a card holding groove 3a constituting a part of the insertion hole 4 of the housing 1 being formed so as to be downwardly open.

Further, the upper housing has a substantially rectangular terminal lead-out portion 3b at a position somewhat above the center with respect to the vertical direction as seen in Fig. 3A. At the rear end on the left-hand side as seen in the drawing, there is formed a terminal mounting portion 3c. Upper terminals 6 which are formed of elastic metal are mounted to this terminal mounting portion 3c so as to be in alignment with each other.

In the terminal lead-out portion 3b, one ends of the upper terminals 6 are led out forward. The upper terminals 6 led out to this terminal lead-out portion 3b consist of first and second terminals 6a and 6e having different lengths.

Further, in the upper and lower end portions as seen in Fig. 3A of the lower housing 2, there are formed a plurality of mounting holes 3d into which the mounting legs of the lower housing 2 are to be fitted.

Of the first and second terminals 6a and 6e led to the terminal lead-out portion 3b, the first terminals 6a are led out longer than the second terminals 6e. Each of the first terminals 6a is bent so as to substantially form a triangle whose apex constitutes a contact portion 6b. The apex of this contact portion 6b is substantially flush with the lower surface 3e of the upper housing 2. The mounting portions 6c of the terminals 6a are mounted to the terminal mounting portion 3c by insert molding or the like, and the other end portions, the outer terminal portions 6d, are led out rearward from the terminals mounting portion 3c.

The contact portions 6f, the terminal mounting portions 6g, and the external terminal portions 6h of the second terminals 6e, which are shorter than the first terminals 6a, are formed in the same manner as those of the first terminals 6a.

For example, four first terminals 6a and four second terminals 6e, eight in total, are arranged so as to be adjacent to each other, and mounted to the terminal mounting portion 3c in a condition in which they are insulated from each other.

Further, the contact portions 6b and 6f overlap each other in the extension of the lead-out direction of the upper terminals 6 (the direction of the arrow B).

The housing 1 is formed by integrating the lower and upper housings 2 and 3 by forcing or inserting the mounting legs 2d of the lower housing 2 into the mounting holes 3d of the upper housing, fixing the forward ends of the mounting legs 2d by crimping or the like.

That is, the housing 1 is composed of the upper housing 3 and the lower housing 2 stacked together.

Further, between the upper and lower members, there is formed an insertion hole 4, which consists of a card holding portion 4a formed by the card holding grooves 2a and 3a, an opening 4b forwardly open, and the terminal mounting portions 2c and 3c closing the bottom.

Further, the lower terminals 5 and the upper terminals 6, formed of metal, are arranged in front and rear lows, and in vertical alignment in the insertion direction of the insertion hole 4 with the insertion hole 4 being therebetween.

The external terminals 5d, 5h, 6d and 6h are mounted by soldering to the lower and upper terminal holes 8a and 8b of a substrate 8.

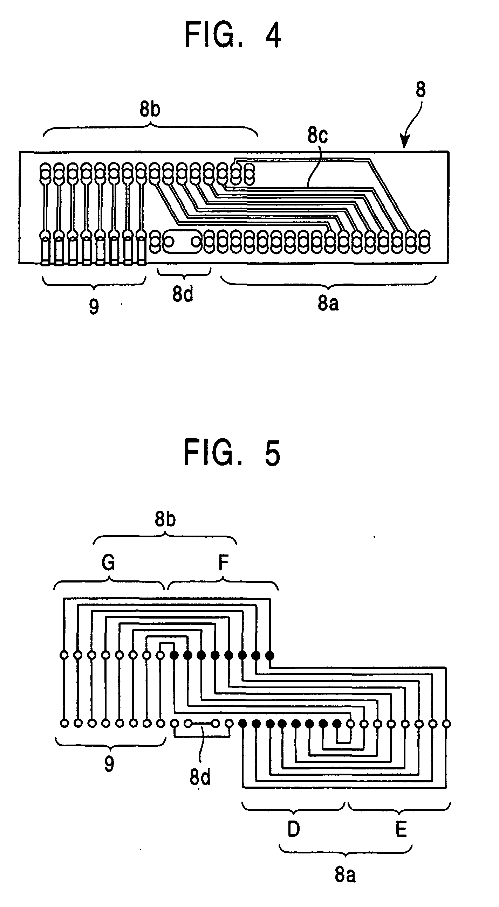

The substrate 8 consists of a plate-like insulating material and, as shown in Fig. 4, has, for example, sixteen lower terminal holes 8a in the right-hand lower portion thereof and sixteen upper terminal holes 8b in the left-hand upper portion thereof.

As shown in the circuit diagram of Fig. 5, the sixteen lower terminal holes 8a are divided into portion D and portion E, eight in each of them, and each of the lower terminal holes 8a thus divided is individually connected at the conductive pattern 8c to form a pair.

The eight lower terminals 5 of the lower housing 2 are inserted into the eight lower terminal holes 8a (the black portions) of the portion D and soldered thereto, and as to the remaining eight lower terminal holes 8a of the portion E, extra lower terminal holes 8a are provided so that it may be applicable to another embodiment described below in which sixteen lower terminals 16 are provided.

Further, as shown in the circuit diagram of Fig. 5, the upper terminal holes 8b are divided into portion F and portion G, eight in each of them, and each of the eight upper terminal holes 8b thus divided is individually-connected at the conductive pattern 8c to form a pair.

The eight upper terminals 6 of the upper housing 3 are inserted into the eight upper terminal holes 8b (the black portions) of the portion F and soldered thereto, and as to the remaining eight upper terminal holes 8b of the portion G, extra upper terminal holes 8b are provided from the first so that it may be applicable to another embodiment described below in which sixteen upper terminals are provided.

In the substrate 8, the lower terminal holes 8a of the portion E and the upper terminal holes 9b of the portion F are individually electrically connected at the conductive pattern 8c.

That is, of the lower terminals 5 and the upper terminals 6, made of metal, the terminals coming into contact with contact portions 11a and 12a of IC cards 11 and 12 described below which are of the same meaning are individually connected at the conductive pattern 8c.

Further, the substrate 8 shown in Fig. 4 has eight lead-out terminals 9 in the left-hand side lower portion. The lead-out terminals 9 are connected to the upper terminal holes 8b to which the lower terminals 5 and the upper terminals 6 are connected at the conductive pattern 8c.

The lead-out terminals 9 protrude from the substrate 8 arranged at the rear end of the housing shown in Fig. 1 and bent into a crank-like configuration by, for example, forming process. These lead-out terminals 9 can be surface mounted on the mother substrate or the like on the device (not shown).

Between the lead-out terminals 9 and the lower terminal holes 8a, switch terminals 8d connected to the detection switch 7 are led out.

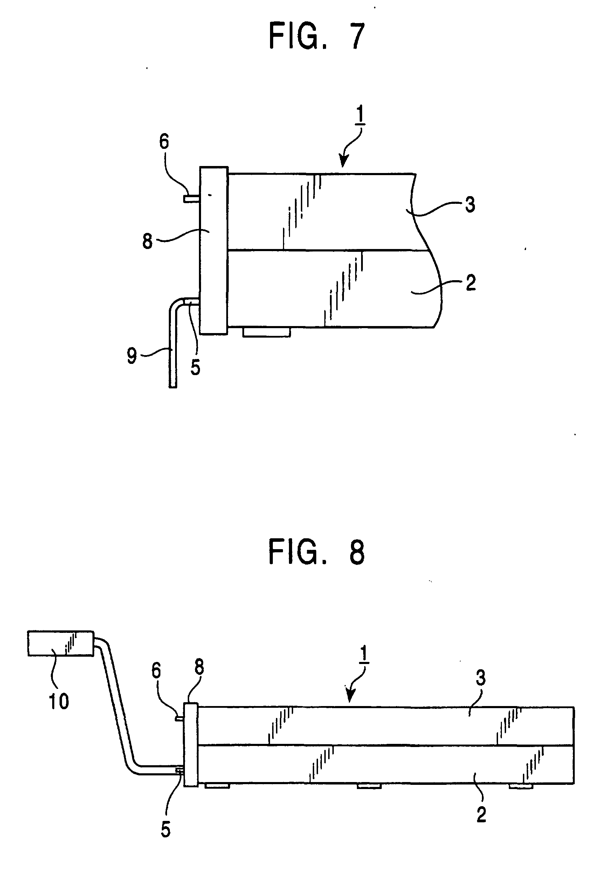

Further, the configuration of the lead-out terminals 9 is not restricted to that for surface mounting described above. It is also possible, as shown in Fig. 7, to bent them downward substantially at right angles by forming process or the like and mount them to the mother substrate or the like by dip soldering.

Further, when effecting connection by using a connector on the device side, it is also possible, as shown in Fig. 8, to connect the connector 10 to the lead-out terminals 9 or metal terminals. Thus, it is possible to eliminate the auxiliary substrate 29 described with reference to the conventional technique.

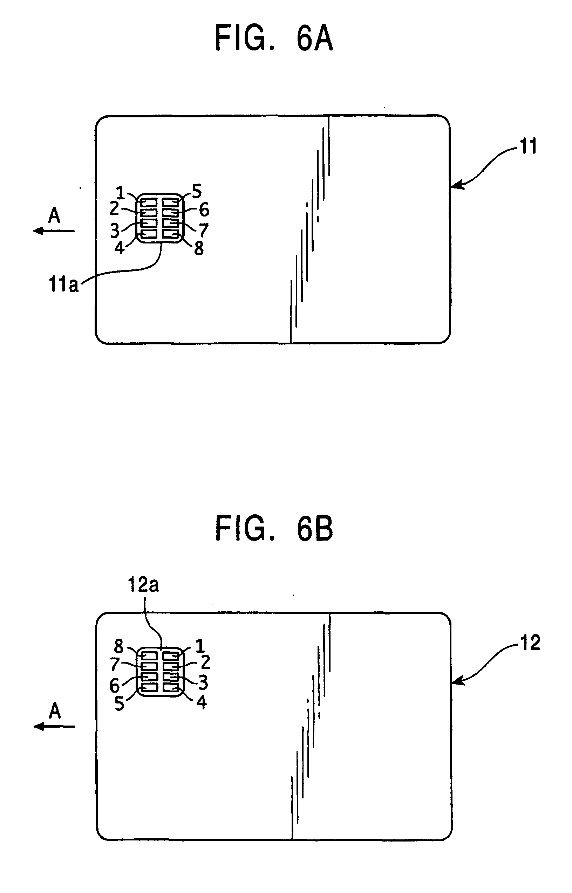

The IC card 11 inserted into the IC card connector of the present invention constructed as described above will be described with reference to Figs. 6A and 6B. In the IC card 11 shown in Fig. 6A, desired information is written to a memory portion (not shown), and a plurality of contact portions 11a connected to this memory portion are exposed on one side.

The contact portions 11a are formed at positions somewhat above the center with respect to the vertical direction as seen in Fig. 6A and nearer to the left-hand end. The contact portions 11a are arranged in two longitudinal rows in the inserting direction indicated by the arrow A, four of them in each row, and are given different meanings to provide different specifications.

By inserting the IC card 11 with the contact portions 11a directed upward into the connector insertion hole 4 of the IC card connector of the present invention in the direction of the arrow A, the upper terminals 6 come into elastic contact with the contact portions 11, and the information written to the memory portion can be read or written.

Further, by turning over the IC card 11 from the condition shown in Fig. 6A and inserting it into the insertion hole 4 with the contact portions 11a directed downward, the lower terminals 5 come into elastic contact with the contact portions 11a, and the information written to the memory portion can be appropriately read or written.

As a modification of the IC card, in an IC card 12 shown in Fig. 6B, a plurality of contact portions 12a are formed at upper positions with respect to the vertical direction as seen in the drawing.

As an IC card connector which allows use of the two kinds of IC cards 11 and 12, another embodiment of the IC card connector of the present invention will be described with reference to Fig. 9.

In a housing 13, an insertion hole 13a is formed, and a lower housing 14 and an upper housing 15 are stacked together. In the lower housing 14 and the upper housing 15, lower terminals 16 and upper terminals 17, each sixteen in number, are arranged in two rows in the insertion direction (the direction indicated by the arrow G) in which the insertion into the insertion hole 13a direction is effected, with the insertion hole 13a therebetween.

By using the IC card connector of this embodiment, it is possible to use a single IC card connector for two kinds of IC cards 11 and 12 in which the contact portions 11a and 12a are at different positions as described above.

While in the above-described embodiments the lead-out terminals 9 are connected to the lower terminals 5 or the upper terminals 6 at the conductive pattern 8c, it is also possible to cause the external terminal portions 5d, 5h, 6d and 6h (not shown) of the lower terminals 5 and the upper terminals 6 to protrude rearward, bend these protruding portions and mount them to the mother substrate.

In the IC card connector of the present invention, one ends of the upper and lower terminals arranged above and below the insertion hole can be brought into elastic contact with the contact portions of the IC card, and the other ends of the terminals are led out to the rear side of the housing from the terminal mounting portion, and the other ends of the terminals are connected to the conductive pattern of the substrate arranged on the rear side of the housing, so that it is possible to connect all the terminals to one substrate and individually connect the upper and lower terminals of the same specifications by the conductive pattern. Thus, it is possible to reduce the number of terminals led out to the mother substrate side.

Further, since the number of terminals led out is reduced, the number of soldered portions is reduced, whereby an increase in degree of freedom is achieved in terms of the design of the mother substrate.

Further, the housing is formed by stacking together upper and lower members, and the insertion hole is formed between the two members, and the terminal mounting portions are respectively formed in the two members, the other ends of the terminals being led out from the rear side of the two members, so that it is possible to provide an IC card connector having satisfactory assembly property.

Further, of the upper and lower terminals, the terminals coming into contact with the contact portions of the IC card given the same meanings are individually connected to each other by the conductive pattern, whereby it is possible to reduce the number of terminals led out to the mother substrate side.

Further, the substrate is provided with lead-out terminals protruding rearward from this substrate, and the lead-out terminals and the other ends of the metal terminals are connected by the conductive pattern, so that the substrate may be soldered to the outer terminals which are the other ends of the metal terminals, whereby it is possible to provide an IC card connector which can be easily assembled.

## Claims

1. An IC card connector comprising a housing (1) formed by an insulating material, an insertion hole (4) which is formed in the housing and into which an IC card is inserted, a terminal mounting portion (2c) closing the bottom of the insertion hole, and a plurality of metal terminals (5, 6) which are arranged in two rows, which rows are in the inserting direction of the insertion hole, in alignment above and below the insertion hole, and which can come into contact with contact portions formed on the IC card, wherein one ends (5a, 5e, 6a, 6e) of the metal terminals can come into elastic contact with the contact portions of the IC card, wherein the other ends (5h, 5d, 6h, 6d) of the metal terminals are led out to the rear side of the housing (1) from the terminal mounting portion, and wherein the other ends of the metal terminals are connected to a conductive pattern (8a, 8b, 8c, 8d) of a substrate (8) arranged on the rear side of the housing.

2. An IC card connector according to Claim 1, wherein the housing is formed by stacking together upper (3) and lower (2) members, wherein the insertion hole (4) is formed between the two members stacked together, wherein the terminal mounting portion (2c, 3c) is formed in each of the two members, and wherein the other ends (5d, 5h, 6d, 6h) of the metal terminals (5, 6) are led out from the rear side of the two members.

3. An IC card connector according to Claim 1 or 2, wherein, of the upper (6) and lower (5) metal terminals, those metal terminals coming into contact with the contact portions of the IC card given the same.meaning are individually connected to each other by the conductive pattern.

4. An IC card connector according to Claim 1, 2 or 3, wherein the substrate (8) is provided with lead-out terminals (9) protruding rearward from this substrate, and wherein the lead-out terminals (9) and the other ends (5d, 5h, 6d, 6h) of the metal terminals are connected by the conductive pattern (8a, 8b, 8c, 8d).

## Patentansprüche

1. IC-Kartenverbinder, aufweisend ein Gehäuse (1), welches durch ein isolierendes Material gebildet ist, eine Einführöffnung (4), welche in dem Gehäuse ausgebildet ist und in welche eine IC-Karte eingeführt wird, einen Anschlusshalterungsbereich (2c), der den Boden der Einführöffnung schließt, und eine Mehrzahl von Metallanschlüssen (5, 6), welche in zwei Reihen angeordnet sind, wobei die Reihen in der Einführrichtung der Einführöffnung in Ausrichtung oberhalb und unterhalb der Einführöffnung sind, und welche in Kontakt mit Kontaktbereichen, welche an der IC-Karte ausgebildet sind, kommen können, wobei erste Enden (5a, 5e, 6a, 6e) der Metallanschlüsse in elastischen Kontakt mit den Kontaktbereichen der IC-Karte kommen können, wobei die anderen Enden (5h, 5d, 6h, 6) der Metallanschlüsse von dem Anschlusshalterungsbereich zu der Rückseite des Gehäuses (1) herausgeführt sind und wobei die anderen Enden der Metallanschlüsse mit einem leitfähigen Muster (8a, 8b, 8c, 8d) eines an der Rückseite des Gehäuses angeordneten Substrates (8) verbunden sind.

2. IC-Kartenverbinder nach Anspruch 1, wobei das Gehäuse gebildet ist durch Zusammenstapeln eines oberen (3) und eines unteren (2) Elements, wobei die Einführöffnung (4) zwischen den zwei zusammengestapelten Elementen ausgebildet ist, wobei der Anschlusshalterungsbereich (2c, 3c) in jedem der beiden Elemente ausgebildet ist, und wobei die anderen Enden (5d, 5h, 6d, 6h) der Metallanschlüsse (5, 6) von der Rückseite der beiden Elemente herausgeführt sind.

3. IC-Kartenverbinder nach Anspruch 1 oder 2, wobei von den oberen (6) und unteren (5) Metallanschlüssen diejenigen Metallanschlüsse, welche in Kontakt mit den Kontaktbereichen der IC-Karte kommen, welchen die gleiche Bedeutung zukommt, durch das leitfähige Muster individuell miteinander verbunden sind.

4. IC-Kartenverbinder nach Anspruch 1, 2 oder 3, wobei das Substrat (8) mit Herausführungsanschlüssen (9), welche von diesem Substrat nach hinten ragen, versehen ist, und wobei die Herausführungsanschlüsse (9) und die anderen Enden (5d, 5h, 6d, 6h) der Metallanschlüsse durch das leitfähige Muster (8a, 8b, 8c, 8d) verbunden sind.

## Revendications

1. Connecteur pour carte à puce, comprenant un boîtier (1), formé par un matériau isolant ; un trou d'introduction (4), qui est formé dans le boîtier et dans lequel une carte à puce est introduite ; une partie de montage de borne (2c), fermant le fond du trou d'introduction et une pluralité de bornes de métal (5, 6), qui sont disposées en deux rangées, lesquelles rangées sont disposées dans le sens d'introduction du trou d'introduction, en alignement au-dessus et au-dessous du trou d'introduction et qui peuvent venir en contact avec des parties de contact, formées sur la carte à puce, dans laquelle des extrémités (5a, 5e, 6a, 6e) des bornes de métal peuvent venir en contact élastique avec les parties de contact de la carte à puce, dans laquelle les autres extrémités (5h, 5d, 6h, 6d) des bornes de métal sortent, du côté arrière du boîtier (1), de la partie de montage de borne et dans laquelle les autres extrémités des bornes de métal sont reliées à un réseau de conducteurs (8a, 8b, 8c, 8d) d'un substrat (8), disposé sur le côté arrière du boîtier.

2. Connecteur pour carte à puce selon la revendication 1, dans lequel le boîtier est formé en empilant ensemble des éléments supérieurs (3) et inférieurs (2), dans lequel le trou d'introduction (4) est formé entre les deux éléments empilés ensemble, dans lequel la partie de montage de borne (2c, 3c) est formée dans chacun des deux éléments et dans lequel les autres extrémités (5d, 5h, 6d, 6h) des bornes de métal (5, 6) sortent du côté arrière des deux éléments.

3. Connecteur pour carte à puce selon la revendication 1 ou 2, dans lequel, parmi les bornes de métal supérieures (6) et inférieures (5), les bornes de métal, qui viennent en contact avec les parties de contact de la carte à puce, qui se voient donner la même portée, sont reliées individuellement entre elles par le réseau de conducteurs.

4. Connecteur pour carte à puce selon la revendication 1, 2 ou 3, dans lequel le substrat (8) est muni de bornes de sortie (9), qui font saillie vers l'arrière depuis ce substrat et dans lequel les bornes de sortie (9) et les autres extrémités (5d, 5h, 6d, 6h) des bornes de métal sont reliées par le réseau de conducteurs (8a, 8b, 8c, 8d).
